# EUROPÄISCHE PATENTSCHRIFT

(11) **EP 2 148 106 B1**
(45) Veröffentlichungstag und Bekanntmachung des Hinweises auf die Patenterteilung: **01.03.2017**
(21) Anmeldenummer: 09008019.3
(22) Anmeldetag: 19.06.2009
(51) Int. Cl.: F16D 3/62

(54) **Drehmomentübertragungseinrichtung**
Torque transmission device
Dispositif de transmission de couple

(30) Priorität: 23.07.2008 DE 102008034214
(43) Veröffentlichungstag der Anmeldung: 27.01.2010
(73) Patentinhaber: Bayerische Motoren Werke Aktiengesellschaft, 80809 München (DE)
(72) Erfinder: Franke, Oliver, 64342 Seeheim-Jugendheim (DE); Dullenkopf, Dirk, 8080 München (DE); Tichelmann, Patrick, 64572 Büttelborn (DE); Kornprobst, Wolfgang, 92345 Töging (DE); Schürmann, Helmut, 67133 Maxdorf (DE); Hahn, Wolfgang, 85248 Schwabhausen (DE)

(56) Entgegenhaltungen:
- EP-A- 1 072 808
- EP-A- 1 627 750
- EP-A- 1 818 556
- DE-C- 182 230
- US-A- 1 466 238
- US-A- 5 163 876
- US-A- 5 766 675
- US-B1- 6 203 434

## Beschreibung

Die vorliegende Erfindung betrifft ein Fahrzeug mit einer Drehmomentübertragungseinrichtung gemäß dem Oberbegriff des Patentanspruches 1.

Ein derartiges Fahrzeug ist aus der EP 1 818 556 A1 bekannt.

Bei Fahrzeugen mit Hinterradantrieb ist die Getriebeausgangswelle üblicherweise über eine Gelenkwelle und mehrere Gelenkwellengelenke mit dem Hinterachsgetriebe gekoppelt. Aus schwingungstechnischen Gründen weisen Gelenkwellen herkömmlicher Fahrzeuge in ihrem Mittelbereich üblicherweise ein Mittengelenk und ein Mittellager auf. Üblicherweise ist in diesem Bereich auch ein Verschiebefreiheitsgrad vorgesehen, wodurch in begrenztem Umfang ein Längenausgleich zwischen dem Getriebeausgang und dem Eingang des Hinterachsgetriebes ermöglicht wird.

Eine konstruktive Vereinfachung wäre möglich, wenn es gelänge, anstatt einer "mehrteiligen Gelenkwelle" eine "einteilige Gelenkwelle" einzusetzen. Der "Längenausgleich" müsste dann an einem der beiden Enden der Gelenkwelle vorgesehen sein. Wünschenswert wäre es, wenn man eine "Verbindungseinrichtung" zur Kopplung einer Gelenkwelle mit einem Getriebeausgang bzw. mit einem Getriebeeingang zur Verfügung hätte, die nicht nur eine Drehmomentenübertragung ermöglicht, sondern darüber hinaus auch zumindest in begrenztem Umfang einen Verschiebefreiheitsgrad aufweist und Kippwinkel zwischen den miteinander zu koppelnden Elementen ausgleichen kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einer "Drehmomentübertragungseinrichtung" zur Kopplung eines Antriebselements, insbesondere einer Getriebeausgangswelle eines Fahrzeugs, mit einem Abtriebselement, insbesondere einer Gelenkwelle. Die Drehmomentübertragungseinrichtung weist eine erste und eine zweite Gruppe von "Spannelementen" auf, welche die Form von Rollen, Bolzen bzw. Buchsen haben können. die Spannelemente der ersten Gruppe sind fest in Bezug auf das Antriebselement angeordnet und in einer Umfangsrichtung des Antriebselements gleichmäßig voneinander beabstandet.

Die zweite Gruppe von Spannelementen sind fest in Bezug auf das Abtriebselement angeordnet und in einer Umfangsrichtung des Abtriebselements gleichmäßig voneinander beabstandet. Die Spannelemente sind so angeordnet, dass in Umfangsrichtung des An- bzw. Abtriebselements gesehen auf ein erstes Spannelement jeweils ein zweites Spannelement, und umgekehrt, folgt. Sind beispielsweise drei erste Spannelemente und drei zweite Spannelemente vorgesehen, so können die Spannelemente in Axialrichtung der Drehmomentübertragungseinrichtung gesehen an oder im Bereich der Eckpunkte eines gedachten, gleichmäßigen Sechsecks angeordnet sein.

Um eine Drehmomentübertragung von den ersten Spannelementen auf die zweiten Spannelemente, bzw. umgekehrt zu ermöglichen, sind diese gemäß der Erfindung über "Kopplungselemente" gekoppelt. Jedes der ersten Spannelemente ist über mindestens ein Kopplungselement mit dem in der einen Umfangsrichtung nächsten zweiten Spannelement und über mindestens ein Kopplungselement mit dem in der entgegen gesetzten Umfangsrichtung nächsten zweiten Spannelement gekoppelt.

Jedes der Kopplungselemente koppelt somit jeweils ein erstes Spannelement und ein in Umfangsrichtung dazu benachbartes zweites Spannelement miteinander.

Die Kopplungselemente können die Form ovaler Ringe bzw. Schlingen aufweisen, welche jeweils ein Paar benachbarter Spannelemente teilweise umschlingen.

Die Kopplungselemente können so beschaffen sein, dass sie ausschließlich Zugkräfte, nicht aber Druckkräfte übertragen können. Aufgrund der symmetrischen Anordnung der Kopplungselemente ist aber dennoch eine Drehmomentübertragung in beide Drehrichtungen möglich.

Nach einer Weiterbildung der Erfindung sind die Kopplungselemente über die zugeordneten Spannelemente "gespannt". Die Kopplungselemente umschlingen dabei zumindest einen Teilumfang der Spannelemente.

Für die Übertragung größerer Drehmomente kann vorgesehen sein, dass auf jedes der Spannelemente mehr als zwei Kopplungselemente, insbesondere eine Vielzahl von Kopplungselementen aufgespannt sind.

Die ersten Spannelemente können mit den zweiten Spannelementen ausschließlich über die Kopplungselemente gekoppelt sein. Alternativ dazu ist es aber auch möglich, dass die Kopplungselemente und/oder die ersten und/oder die zweiten Spannelemente mit einem Kunststoffmaterial oder Gummi umschäumt bzw. eingegossen sind, ähnlich wie dies bei so genannten "Hardy-Scheiben" der Fall ist. An einem oder an beiden stirnseitigen Endbereichen der Spannelemente kann jeweils ein Absatz, ein Bund, eine Scheibe oder eine sonstige Sicherungseinrichtung vorgesehen sein, der bzw. die ein Herunterrutschen der Kopplungselemente von dem betreffenden Spannelement verhindert.

Untersuchungen haben gezeigt, dass mit Kopplungselementen, die ganz oder zumindest teilweise aus Kunstfasen wie z. B. Carbonfasern oder Glasfasern bestehen, sehr große Kräfte und somit sehr große Drehmomente übertragen werden können. Aufgrund der Elastizität von Glasfasern ermöglichen Kopplungselemente aus Glasfasern auch eine gewisse Relativverschiebung des Antriebselements in Bezug auf das Abtriebselement in Axialrichtung.

Zur Verringerung von Verschleißerscheinungen aufgrund von Relativbewegungen zwischen den Spannelementen und den daran anliegenden bzw. darüber gespannten Kopplungselementen können die Spannelemente aus einem Reibverschleiß mindernden Material hergestellt bzw. mit einem Reibverschleiß mindernden Material beschichtet sein. Hierfür in Frage kommen z.B. "Schmierstoffe wie Polytetraflurethylen, Graphit oder Titandioxid". Diese inkorporierten verschleißmindernden Stoffe bilden einen dünnen trennenden Schmierfilm zwischen den Spannelementen und den Kopplungselementen.

Die Spannelemente können aus gehärtetem Stahl hergestellt sein. Die Spannelemente können fliegend gelagert sein, d. h. lediglich an einer ihrer Stirnseiten mit dem Antriebselement bzw. dem zugeordneten Abtriebselement verbunden sein. Bei einer fliegenden Lagerung werden die Spannelemente einer Drehmomentübertragung auf Biegung beansprucht und müssen dementsprechend ausgelegt sein.

Im Folgenden wird die Erfindung im Zusammenhang mit der Zeichnung näher erläutert. Es zeigen:
- Figur 1: eine Drehmomentübertragungseinrichtung gemäß der Erfindung in perspektivischer Darstellung;
- Figur 2: eine Draufsicht auf die Drehmomentübertragungseinrichtung der Figur 1;
- Figur 3: eine Stirnansicht der Drehmomentübertragungseinrichtung der Figur 1 von der Antriebsseite her gesehen;
- Figur 4: einen Querschnitt durch die Drehmomentübertragungseinrichtung der Figur 1 in perspektivischer Darstellung;
- Figur 5: eine weitere Draufsicht auf die Drehmomentübertragungseinrichtung der Figur 1; und
- Figur 6: ein speziell geformtes Kopplungselement.

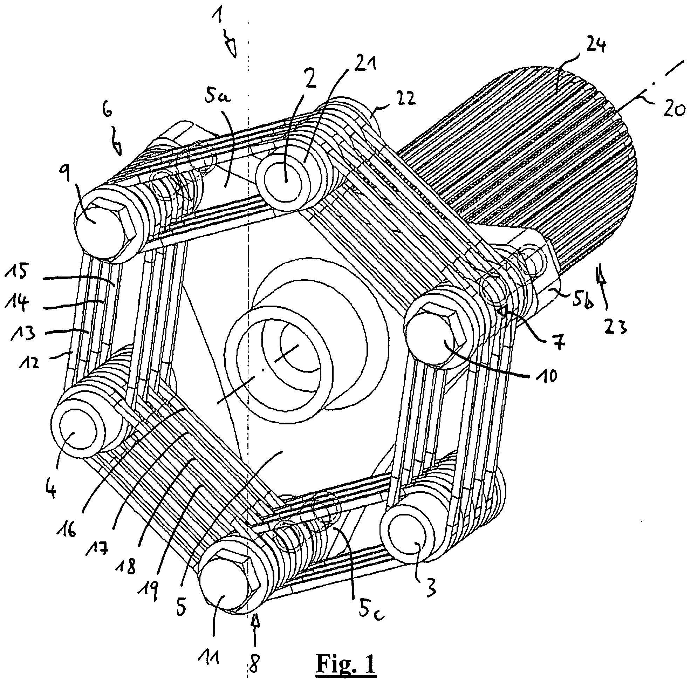

Figur 1 zeigt eine Drehmomentübertragungseinrichtung 1 mit einem hier nicht näher dargestellten Antriebselement, ersten Spannelementen 2, 3, 4, die in einer Umfangsrichtung der Drehmomentübertragungseinrichtung 1 gleichmäßig, d. h. 120° voneinander beabstandet sind. Die Drehmomentübertragungseinrichtung 1 weist ferner ein Abtriebselement 5 auf, das wiederum drei Arme 5a, 5b, 5c aufweist, an denen jeweils ein zweites Spannelement 6, 7, 8 einseitig abstehend angeordnet ist. Ein erstes Spannelement 2, 3, 4 ist somit jeweils zwischen zwei zweiten Spannelementen 6, 7, 8 angeordnet, und umgekehrt. Die insgesamt sechs Spannelemente bilden ein gleichmäßiges Sechseck.

Die zweiten Spannelemente 6, 7, 8 sind mittels Schrauben 9, 10, 11 an die Arme 5a, 5b, 5c des Abtriebselements 5 angeschraubt. Die Schrauben 9, 10, 11 durchsetzen dabei die zweiten Spannelemente 6, 7, 8.

Wie aus Figur 1 ersichtlich ist, haben die Spannelemente 2, 3, 4 sowie 6, 7, 8 die Form von Rollen bzw. Bolzen bzw. Buchsen.

Um eine Drehmomentübertragung von den mit dem hier nicht näher dargestellten Antriebselement verbundenen ersten Spannelementen 2, 3, 4 auf die mit dem Abtriebselement 5 verbundenen zweiten Spannelementen 6, 7, 8, und umgekehrt, zu ermöglichen, ist jedes der Spannelemente 2, 3, 4, 6, 7, 8 mit jeweils zwei in Umfangsrichtung benachbarten Spannelementen über mehrere Kopplungselemente verbunden. Beispielsweise ist das erste Spannelement 4 über vier Kopplungselemente 12, 13, 14, 15 mit dem zweiten Spannelement 6 und über ebenfalls vier weitere Kopplungselemente 16, 17, 18, 19 mit dem zweiten Spannelemente 8 verbunden.

Wie aus Figur 1 ersichtlich ist, haben die Kopplungselemente 12 - 19 die Form ovaler Ringe bzw. Schlingen. Die Kopplungselemente umschlingen somit jeweils einen Teilumfang von circa 180° der Spannelemente 4, 6 bzw. 4, 8. Die Kopplungselemente können ganz oder zumindest teilweise aus Glasfasermaterialen hergestellt sein und weisen dementsprechend auch eine gewisse Elastizität in Axialrichtung 20 der Drehmomentübertragungseinrichtung 1 auf. Dies bedeutet, die ersten Spannelemente 2 - 4 können sich in gewissem Umfang relativ zu den zweiten Spannelementen 6, 8 verschieben, wobei sich die Kopplungselemente 15 - 19 dementsprechend deformieren.

Die Drehmomentübertragungseinrichtung 1 ermöglicht somit sowohl eine Drehmomentübertragung in beide Drehrichtungen. Zusätzlich ermöglichen die Kopplungselemente 15 - 19 aber auch eine gewisse Axialverschiebung des Antriebselements gegenüber dem Abtriebselement bzw. umgekehrt sowie eine gewisse Kippbewegung des Antriebselements gegenüber dem Abtriebselement 5.

Wie aus Figur 1 am Bespiel des ersten Spannelements 2 ersichtlich ist, sind an den Stirnseiten der Spannelemente, hier insbesondere des Erstspannelements 2, Absätze bzw. Scheiben 21, 22 vorgesehen, die als Sicherungselemente fungieren und verhindern, dass die zugeordneten Kopplungselemente von dem buchsen- bzw. rollenartigen ersten Spannelement 2 herunterrutschen.

Die Spannelemente 2 - 4 bzw. 6 - 8 können aus gehärtetem Stahl hergestellt sein. Wie in Figur 1 anhand der zweiten Spannelemente 6 - 8 ersichtlich ist, können die Spannelemente fliegend gelagert sein, d. h. nur an einer ihrer beiden Stirnseiten mit dem Antriebselement bzw. dem Abtriebselement 5 verbunden sein. Bei einer Drehmomentübertragung von dem Antriebselement auf das Abtriebselement bzw. umgekehrt kommt es daher in gewissen Umfang zu einer Deformierung bzw. Biegung der Spannelemente 2 - 4 bzw. 6 - 8, wodurch eine relativ gleichmäßige Lastverteilung auf die einzelnen Spannelemente und die sie verbindenden Kopplungselemente gewährleistet ist.

Vollständigkeitshalber sei noch das zapfenartige Ende 23 des Abtriebselements 5 erwähnt, das hier mit einem Kerbzahnprofil 24 versehen ist. Das zapfenartige Ende kann z. B. in ein mit einem Innenkerbzahnprofil versehenes Endstück einer Gelenkwelle eingeschoben werden. Die Kerbverzahnung ermöglicht somit eine Relatiwerschiebung des Abtriebselements 5 gegenüber der Gelenkwelle.

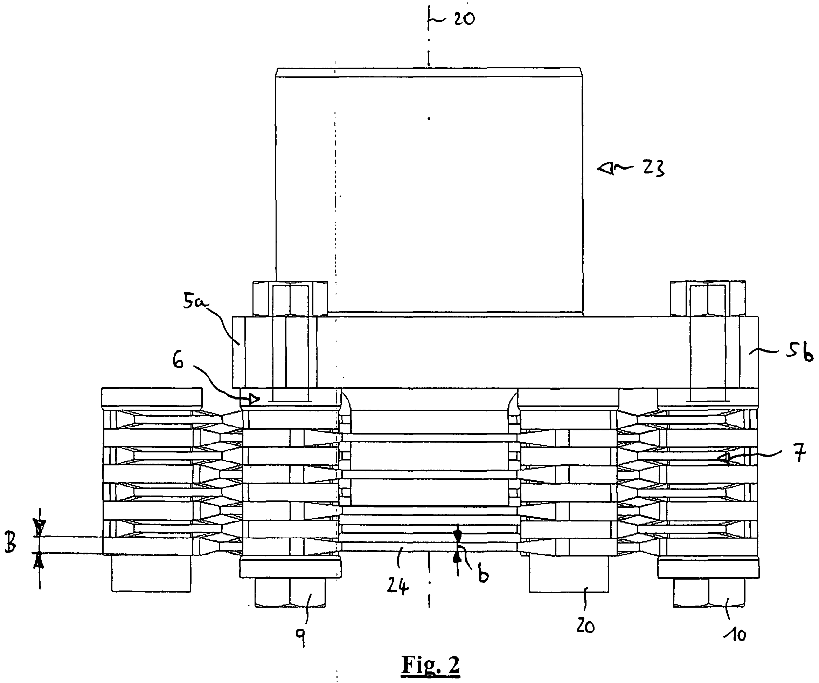

Figur 2 zeigt eine Draufsicht auf die Drehmomentübertragungseinrichtung der Figur 1. In dieser Darstellung deutlich erkennbar ist, dass die Kopplungselemente in denjenigen Abschnitten, welche die Spannelemente umschlingen, in Richtung der Axialrichtung 20 gesehen eine größere Breite aufweisen als in den "freien" Abschnitten zwischen den einzelnen Spannelementen. Konkret weist beispielsweise ein Kopplungselement 24 im Bereich des Spannelements 6 eine größere Breite B auf als im Bereich zwischen dem Spannelement 6 und dem Spannelement 2, wo die Breite des Kopplungselements 24 lediglich b beträgt. Durch die geringere Breite im Bereich zwischen den benachbarten Spannelementen wird erreicht, dass sich die Kopplungselemente besser biegen können und somit besser axiale Relativverschiebungen des Antriebselements gegenüber dem Abtriebselement bzw. Kippbewegungen des Antriebselements gegenüber dem Abtriebselement, und umgekehrt, ermöglichen.

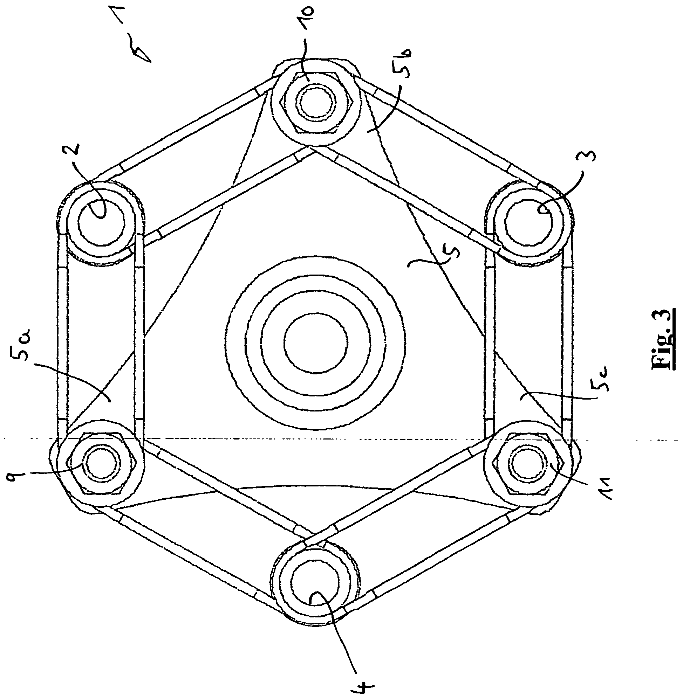

Figur 3 zeigt eine Stirnansicht der Drehmomentübertragungseinrichtung 1 von dem hier nicht näher dargestellten Antriebselement her auf das Abtriebselement 5 gesehen.

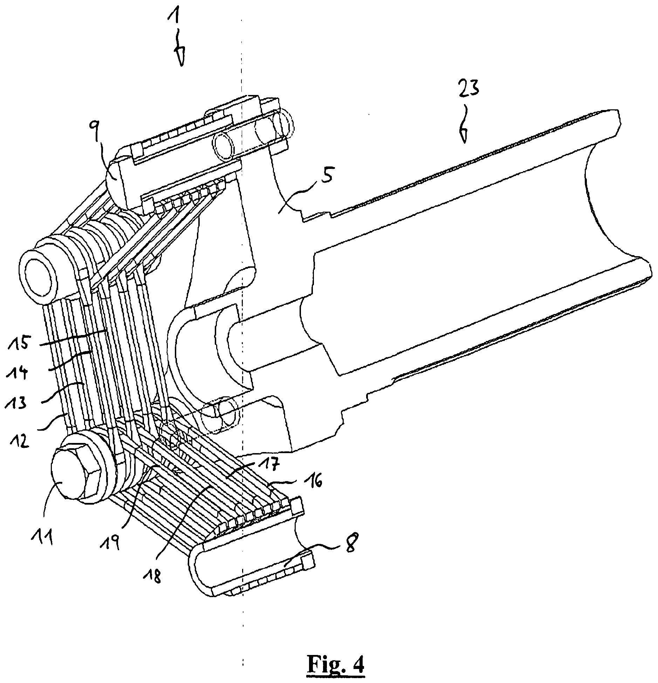

Figur 4 zeigt einen Querschnitt durch die Drehmomentübertragungseinrichtung 1 der Figur 1. Deutlich zu erkennen ist, dass es sich bei den Spannelementen um buchsenartige Spannelemente handelt, was insbesondere an dem Spannelement 8 zu sehen ist.

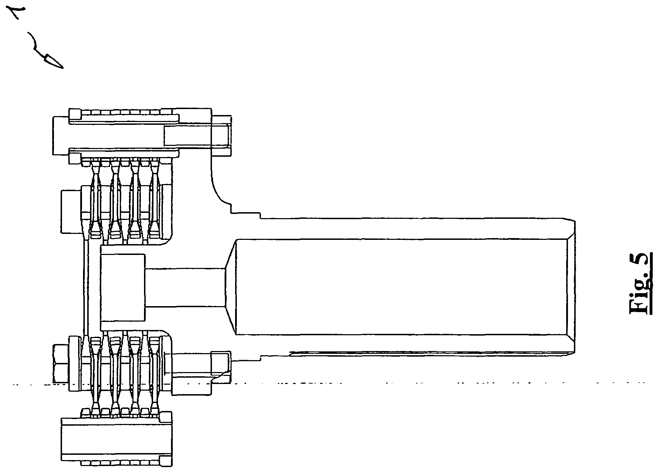

Figur 5 zeigt eine weitere Draufsicht auf die Drehmomentübertragungseinrichtung 1, wobei hier besonders deutlich die unterschiedlichen Breiten der Kopplungselemente im Bereich der Spannelemente einerseits und im Bereich zwischen den Spannelementen andererseits zu sehen sind.

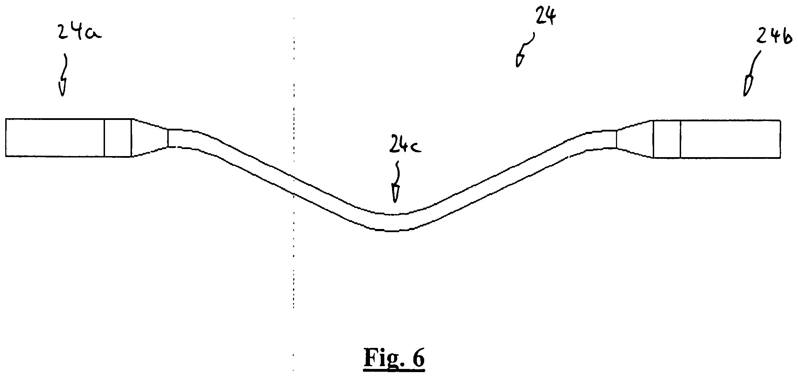

Figur 6 zeigt ein Ausführungsbeispiel eines Kopplungselements. Das in Figur 6 in Seitenansicht gezeigte Kopplungselement weist ebenfalls die Form eines ovalen Rings bzw. einer Schleife auf. Im Unterschied zu den Kopplungselementen, die im Zusammenhang mit den Figuren 1 - 5 beschrieben sind, ist das Kopplungselement 24 der Figur 6 jedoch nicht eben, sondern im Bereich zwischen den Abschnitten 24a, 24b, welche im montiertem Zustand zugeordnete Spannelemente umschlingen, gekrümmt ausgeführt. Der gekrümmte Mittelbereich 24c, der im Übrigen auch noch eine geringere Breite aufweist als die "Umschlingungsabschnitte 24a, 24b" ermöglicht somit bei einer Axialverschiebung bzw. bei einer Kippung des Antriebselements relativ zu dem Abtriebselement eine noch bessere Deformierung des Kopplungselements 24.

## Patentansprüche

1. Fahrzeug mit einer Drehmomentübertragungseinrichtung (1) zur Kopplung einer Getriebeausgangswelle des Fahrzeugs mit einer Gelenkwelle (5) des Fahrzeugs, mit
- einer ersten Gruppe von Spannelementen (2 - 4), die fest in Bezug auf die Getriebeausgangswelle angeordnet sind und die in einer Umfangsrichtung der Getriebeausgangswelle gleichmäßig voneinander beabstandet sind,
- einer zweiten Gruppe von Spannelementen (6, 7, 8), die fest in Bezug auf die Gelenkwelle (5) angeordnet sind und die in einer Umfangsrichtung der Gelenkwelle (5) gleichmäßig voneinander beabstandet sind, wobei in Umfangsrichtung der Getriebeausgangswelle bzw. der Gelenkwelle gesehen auf ein erstes Spannelement jeweils ein zweites Spannelement, und umgekehrt folgt, und
- Kopplungselementen (15 - 19, 24), wobei jedes der ersten Spannelemente (2 - 4) über mindestens ein Kopplungselement (15 - 19) mit dem in der einen Umfangsrichtung nächsten zweiten Spannelement (6 - 8) und über mindestens ein Kopplungselement (15 - 19) mit dem in der entgegen gesetzten Umfangsrichtung nächsten zweiten Spannelement (6 - 8) gekoppelt ist, und wobei die Kopplungselemente (12 - 19) über zugeordnete Spannelemente (2 - 4, 6 - 8) gespannt sind und die Kopplungselemente (12 - 19) die Spannelemente (2 - 4, 6 - 8) zumindest über einen Teilumfang der Spannelemente (2 - 4, 6 - 8) umschlingen, wobei
- die Kopplungselemente aus einem Kunststoffmaterial bestehen, das durch Fasern verstärkt ist,
**dadurch gekennzeichnet, dass**
die Spannelemente (2 - 4, 6 - 8) aus einem Material hergestellt sind, das einen als Schmierstoff wirkenden Stoff enthält oder die Spannelemente (2 - 4, 6 - 8) mit einem Material beschichtet sind, das einen als Schmierstoff wirkenden Stoff enthält, wobei es sich bei dem Schmierstoff um Polytetraflurethylen, Graphit oder um Titandioxid handelt.

2. Fahrzeug nach Anspruch 1, **dadurch gekennzeichnet, dass** jedes der Kopplungselemente (15 - 19) ein erstes Spannelement (2 - 4) und ein in Umfangsrichtung dazu benachbartes zweites Spannelement miteinander koppelt.

3. Fahrzeug nach Anspruch 1 oder 2, **dadurch gekennzeichnet, dass** auf jedes der Spannelemente (2 - 4, 6 - 8) mehr als zwei Kopplungselemente (12 - 19), insbesondere eine Vielzahl von Kopplungselementen (12 - 19), aufgespannt sind.

4. Fahrzeug nach einem der Ansprüche 1 bis 3, **dadurch gekennzeichnet, dass** die erste Gruppe von Spannelementen (2 - 4) mit der zweiten Gruppe von Spannelementen (6 - 8) ausschließlich über die Kopplungselemente (12 - 19) gekoppelt sind.

5. Fahrzeug nach einem der Ansprüche 1 bis 4, **dadurch gekennzeichnet, dass** die Kopplungselemente (12 - 19) in ein elastisches, die einzelnen Kopplungselemente verbindendes Kopplungselement eingeschäumt bzw. eingegossen sind.

6. Fahrzeug nach einem der Ansprüche 1 bis 5, **dadurch gekennzeichnet, dass** im stirnseitigen Endbereich der Spannelemente (2 - 4, 6 - 8) jeweils ein Absatz oder eine Scheibe (21, 22) vorgesehen ist, welcher bzw. welche ein Herunterrutschen der Kopplungselemente von dem betreffenden Spannelement (2 - 4, 6 - 8) verhindert bzw. verhindern.

7. Fahrzeug nach einem der Ansprüche 1 bis 6, **dadurch gekennzeichnet, dass** die Kopplungselemente (12 - 19) zumindest teilweise aus Glasfasern bestehen.

8. Fahrzeug nach Anspruch 7, **dadurch gekennzeichnet, dass** die Kopplungselemente aus einem Kunststoffmaterial bestehen, das durch Glasfasern, verstärkt ist.

9. Fahrzeug nach einem der Ansprüche 1 bis 8, **dadurch gekennzeichnet, dass** die Kopplungselemente die Form ovaler Ringe bzw. Schlingen aufweisen.

10. Fahrzeug nach einem der Ansprüche 1 bis 9, **dadurch gekennzeichnet, dass** die Spannelemente eine rollen-, bolzen bzw. buchsenartige Form aufweisen.

## Claims

1. A vehicle with a torque transmission device (1) for coupling a transmission output shaft of the vehicle to a drive shaft (5) of the vehicle, having
- a first group of tensioning elements (2 - 4) which are arranged fixedly with respect to the transmission output shaft and which are spaced apart from one another regularly in a circumferential direction of the transmission output shaft,
- a second group of tensioning elements (6, 7, 8) which are arranged fixedly with respect to the drive shaft (5) and which are spaced apart from one another regularly in a circumferential direction of the drive shaft (5), wherein seen in the circumferential direction of the transmission output shaft or of the drive shaft, a respective second tensioning element follows a first tensioning element, and vice versa, and
- coupling elements (15 - 19, 24), wherein each of the first tensioning elements (2 - 4) is coupled to the next second tensioning element (6 - 8) in the one circumferential direction by at least one coupling element (15 - 19) and is coupled to the next second tensioning element (6 - 8) in the opposite circumferential direction by at least one coupling element (15 - 19), and wherein the coupling elements (12 - 19) are tensioned by associated tensioning elements (2 - 4, 6 - 8) and the coupling elements (12 - 19) loop around the tensioning elements (2 - 4, 6 - 8) at least over a partial circumference of the tensioning elements (2 - 4, 6 , 8), wherein
- the coupling elements comprises a plastics material which is reinforced by fibres,
**characterised in that**
the tensioning elements (2 - 4, 6 - 8) are produced from a material containing a substance which acts as a lubricant, or the tensioning elements (2 - 4, 6 - 8) are coated with a material which contains a substance acting as a lubricant, the lubricant being polytetrafluoroethylene, graphite or titanium dioxide.

2. A vehicle according to claim 1, **characterised in that** each of the coupling elements (15 - 19) couples together a first tensioning element (2 - 4) and a second terisioning element which is adjacent thereto in the circumferential direction.

3. A vehicle according to claim 1 or claim 2, **characterised in that** more than two coupling elements (12 - 19), especially a plurality of coupling elements (12 - 19) are stretched on each of the tensioning elements (2 - 4, 6 - 8).

4. A vehicle according to any one of claims 1 to 3, **characterised in that** the first group of tensioning elements (2 - 4) is coupled to the second group of tensioning elements (6 - 8) exclusively by the coupling elements (12 - 99).

5. A vehicle according to any one of claims 1 to 4, **characterised in that** the coupling elements (12 - 19) are foamed or cast into a resilient coupling element which connects the individual coupling elements.

6. A vehicle according to any one of claims 1 to 5, **characterised in that** provided in the end-face end region of the tensioning elements (2 - 4, 6 - 8) is a respective shoulder or a disc (21, 22) which prevents or prevent the coupling elements from slipping off the respective tensioning element (2 - 4, 6 - 8).

7. A vehicle according to any one of claims 1 to 6, **characterised in that** the coupling elements (12 - 19) comprise at least partly of glass fibres.

8. A vehicle according to claim 7, **characterised in that** the coupling elements comprises a plastics material which is reinforced by glass fibres.

9. A vehicle according to any one of claims 1 to 8, **characterised in that** the coupling elements have the form of oval rings or loops.

10. A vehicle according to any one of claims 1 to 9, **characterised in that** the tensioning elements have a roller-like, bolt-like or bushing-like form.

## Revendications

1. Véhicule équipé d'un dispositif de transmission de couple (1) permettant d'accoupler l'arbre de sortie de la boîte de vitesses du véhicule avec l'arbre de transmission (5) de celui-ci comprenant :
un premier groupe d'éléments de serrage (2-4) qui sont montés solidairement par rapport à l'arbre de sortie de la boîte de vitesses et sont situés à la même distance les uns des autres dans la direction périphérique de l'arbre de sortie de la boîte de vitesses,
un second groupe d'éléments de serrage (6, 7, 8) qui sont montés solidairement par rapport à l'arbre de transmission (5) et sont situés à la même distance les uns des autres dans la direction périphérique de l'arbre de transmission (5), véhicule dans lequel la direction périphérique de l'arbre de sortie de la boîte de vitesses ou de l'arbre de transmission, un premier élément de serrage fait respectivement suite à un second élément de serrage et inversement, et
des éléments d'accouplement (15-29, 24), chacun des premiers éléments de serrage (2-4) étant accouplé par l'intermédiaire d'au moins un élément d'accouplement (15-19) avec le second élément de serrage (6-8) le plus proche dans une direction périphérique et par l'intermédiaire d'au moins un élément d'accouplement (15-19) avec le second élément de serrage (6-8) le plus proche dans la direction périphérique opposée,
et les éléments d'accouplement (12-19) étant tendus par des éléments de serrage (2-4, 6-8) associés, et les éléments d'accouplement (12-19) entourant en boucle les éléments de serrage (2-4, 6-8) au moins sur une partie de la périphérie de ces éléments (2-4, 6-8), et
les éléments d'accouplement étant réalisés en un matériau synthétique renforcé par des fibres,
**caractérisé en ce que**
les éléments de serrage (2-4, 6-8) sont réalisés en un matériau qui renferme une matière agissant en tant que lubrifiant ou les éléments de serrage (2-4, 6-8) sont recouverts d'un matériau qui renferme un élément agissant en tant que lubrifiant, ce lubrifiant étant constitué par du polytétrafluoréthylène, du graphite ou du dioxyde de titane.

2. Véhicule conforme à la revendication 1,
**caractérisé en ce que**
chacun des éléments d'accouplement (15-19) accouple un premier élément de serrage (2-4) et un second élément de serrage voisin de celui-ci dans la direction périphérique.

3. Véhicule conforme à la revendication 1 ou 2,
**caractérisé en ce que**
sur chacun des éléments de serrage (2-4, 6-8) sont tendus plus de deux éléments d'accouplement (12-19), en particulier plusieurs éléments d'accouplement (12-19).

4. Véhicule conforme à l'une des revendications 1 à 3,
**caractérisé en ce que**
les éléments de serrage du premier groupe d'éléments de serrage (2-4) sont accouplés avec les éléments de serrage (6-8) du second groupe d'éléments de serrage uniquement par l'intermédiaire des éléments d'accouplement (12-19).

5. Véhicule conforme à l'une des revendications 1 à 4,
**caractérisé en ce que**
les éléments d'accouplement (12-19) sont expansés ou coulés dans un élément d'accouplement élastique reliant les différents éléments d'accouplement.

6. Véhicule conforme à l'une des revendications 1 à 5,
**caractérisé en ce qu'**
il est prévu dans la zone d'extrémité frontale des éléments de serrage (2-4, 6-8) un talon ou un disque respectif (21, 22) qui empêche que les éléments d'accouplement glissent sous les éléments de serrage (2-4, 6-8) associés.

7. Véhicule conforme à l'une des revendications 1 à 6,
**caractérisé en ce que**
les éléments d'accouplement (12-19) sont réalisés au moins partiellement en fibres de verre.

8. Véhicule conforme à la revendication 7,
**caractérisé en ce que**
les éléments d'accouplement sont réalisés en un matériau synthétique renforcé par des fibres de verre.

9. Véhicule conforme à l'une des revendications 1 à 8,
**caractérisé en ce que**
les éléments d'accouplement ont la forme de bagues ou de boucles ovales.

10. Véhicule conforme à l'une des revendications 1 à 9,
**caractérisé en ce que**
les éléments de serrage ont la forme de galets, de boulons, ou de douilles.
